# EUROPÄISCHE PATENTSCHRIFT

(11) **EP 4 511 589 B1**
(45) Veröffentlichungstag und Bekanntmachung des Hinweises auf die Patenterteilung: **03.06.2026**
(21) Anmeldenummer: 23720058.9
(22) Anmeldetag: 13.04.2023
(51) Int. Cl.: F16L 55/34, F16L 55/44, F16L 101/10, F16L 101/12, F16L 101/30

(54) **ROBOTER ZUR GRABENLOSEN LEITUNGS- UND SCHACHTSANIERUNG**
ROBOT FOR TRENCHLESS PIPELINE AND MANHOLE REHABILITATION
ROBOT POUR REMISE EN ÉTAT DE PIPELINE ET DE TROU D'HOMME SANS TRANCHÉE

(30) Priorität: 20.04.2022 AT 502652022
(43) Veröffentlichungstag der Anmeldung: 26.02.2025
(73) Patentinhaber: Müller, Matthias Manuel, 2102 Hagenbrunn (AT); Franz, Armin, 1180 Wien (AT)
(72) Erfinder: MÜLLER, Matthias Manuel, 2102 Hagenbrunn (AT)
(74) Vertreter: Vinazzer, Edith
(86) Internationale Anmeldenummer: PCT/EP2023/059685
(87) Internationale Veröffentlichungsnummer: WO 2023/202945

(56) Entgegenhaltungen:
- EP-B1- 0 856 118
- WO-A1-2012/112835
- CN-A- 112 128 512
- CN-U- 209 557 886
- CN-U- 214 119 373
- FR-A1- 2 917 153
- FR-A1- 3 016 674
- US-A1- 2016 018 045
- US-A1- 2021 301 967

## Beschreibung

Die Erfindung betrifft einen Roboter zur grabenlosen Rohrleitungs- und Schachtsanierung mit
mindestens zwei Ausdehnungs-Segmenten mit
je einem selbsthemmenden Ausdehnungs-Mechanismus mit zumindest einem Doppelscherenhub zum Verspreizen und Andrücken an der Rohr- bzw. Schachtwand,
einem Ausdehnungs-Segment als vorderstes Segment,
wobei der Ausdehnungs-Mechanismus zur Betätigung des Doppelscherenhubs eine Spindel aufweist, welche im Ausdehnungs-Segment in der Fortbewegungsrichtung des Roboters orientiert drehbar gelagert ist
und wobei sämtliche Segmente über Verbindungsstücke miteinander gekoppelt sind.

Der Roboter ist insbesondere zum Öffnen von ausgehärteten Liner-Schläuchen, zur Inspektion und Reinigung von Rohrleitungen, zur Freilegung von Verstopfungen und Entfernung von Ablagerungen in Rohren vorgesehen.

In der Instandhaltung von Abwasserrohren, Trinkwasserrohren und Lüftungsschächten werden Roboter benötigt, um die Arbeiten ohne Freilegung des Rohres oder Schachtes durchführen zu können. In der Regel ausgestattet mit einem Bildsensor und einem Werkzeug, zumeist einem Fräswerkzeug, werden diese Roboter bislang von Hand gesteuert. Dies war bisher vor allem deshalb notwendig, weil diese Gerätschaften die Lage der einzelnen Komponenten nicht ermitteln bzw. auch die Aktoren nicht kontrolliert genug ansteuern konnten. Durch die Verwendung von Elektromotoren zur präzisen Positionierung und beispielsweise von Encodern zur exakten Positionsermittlung der bewegten Komponenten ist es möglich, Bewegungsabläufe zu automatisieren. Beispielsweise kann per Tempomat eine ständige Vorwärts- oder Rückwärtsbewegung forciert werden, es kann eine bestimmte Stelle im Rohr angefahren werden, wenn die Position des Roboters im Rohr gemessen werden kann. Es gibt einige Anwendungen, bei denen eine Automatisierung des Roboters sinnvoll sein kann, wie beispielsweise das eigenständige Abtragen von Ablagerungen an Rohrwänden mittels Bürstenaufsatz.

Ein Roboter der eingangs genannten Art ist aus der US 2016/018045 A1 bekannt. Dieser Roboter weist eine modulare Roboteranordnung mit einem Cluster einzelner Pod-Anordnungen auf, die so konfiguriert sind, dass sie beispielsweise in ein Rohr mit großem Durchmesser und kreisförmigem Querschnitt passen. Eine spezielle Anordnung umfasst eine zentrale Pod-Baugruppe und drei äußere Pod-Baugruppen, die abwechselnd an Seitenwänden der zentralen Pod-Baugruppe befestigt sind. Die drei äußeren Pod-Baugruppen sind Antriebspod-Baugruppen, die jeweils einen Raupenantrieb zum Bewegen der modularen Roboteranordnung tragen. Die äußeren Pod-Baugruppen sind mit Doppelscherenhüben ausgestattet. Die zentrale Pod-Baugruppe umfasst eine Funktionalität, die spezifisch für eine bestimmte Reparatur-, Wartungs-, Montage- oder sonstige Funktion, die innerhalb der jeweiligen Leitungsumgebung ausgeführt werden soll, vorgesehen ist. Die modulare Roboteranordnung kann mehrere miteinander verbundene Cluster aus einzelnen Pod-Anordnungen umfassen.

Die CN 214 119 373 U betrifft einen Roboter zur Erkennung von Rohrleitungen mit variablem Durchmesser, der eine hohe Effizienz bei einer Durchmesseränderung aufweist und bei Durchmesseränderungen bequem zu verwenden ist. Er weist ein Hauptkörpergestell auf, welches mit einem Erkennungsmechanismus zum Erkennen des Inneren einer Rohrleitung versehen ist. Der Laufmechanismus umfasst Schwenkarme, die in Abständen am Umfang des Hauptkörpergestells angelenkt sind und an ihren vordersten Enden Laufrollen tragen.

Bei dem aus der FR 3 016 674 A1 bekannten Roboter ist eine Schubvorrichtung vorgesehen, die sich durch Längsausdehnung und -einziehung in einer Leitung bewegt, mit einem vorderen Modul und einem hinteren Modul versehen ist, die jeweils mit Reibungsmitteln ausgestattet sind, die in einer Richtung senkrecht zu einer Längsbewegungsrichtung der Schubvorrichtung eingesetzt werden. Zwischen den beiden Modulen ist ein ein- und ausfahrbarer Betätigungskörper angeordnet.

Die einsetzbaren Reibungsmittel weisen Arme auf, die an einem ersten Ende mit gewölbten, an die Leitungswand anlegbaren Schuhen ausgestattet und an ihrem zweiten Ende gelenkig mit den Modulen verbunden sind.

Die FR 2 917 153 A1 betrifft einen Roboter zum Bewegen eines Pakets, das insbesondere Atommüll enthält, in einem Deponierohr, wobei dieser Roboter einen vorderen Teil und einen hinteren Teil umfasst, die durch einen zentralen Aktuator miteinander verbunden sind, der in der Lage ist, diese Teile einander anzunähern und voneinander weg zu bewegen, wobei der vordere Teil und der hintere Teil jeweils eine kreisförmige Kontur aufweisen, die mit einem torischen Zylinder, beispielsweise einer aufblasbaren torischen Dichtung, versehen ist, wobei jeder Teil durch Aufblasen seines torischen Zylinders im Rohr blockiert werden kann, Der Roboter weist eine Hydraulikeinheit auf, die in der Lage ist, den vorderen torischen Zylinder und den hinteren torischen Zylinder mit einer Flüssigkeit aufzublasen und zu entleeren, sowie eine Steuereinheit für die Hydraulikeinheit und einen zentralen Aktuator.

Aus der US 2021/301967 A ist ein Roboter bekannt, welcher einen Körper mit ersten und zweiten Segmenten umfasst, die so konfiguriert sind, dass sie sich relativ zueinander bewegen. Jedes Segment hat mindestens zwei Beine. Die Beine verlaufen nicht parallel zum Körper und sind so konfiguriert, dass sie sich relativ zum Körper nach außen ausfahren und nach innen einziehen können, um dem Körper die Bewegung innerhalb eines Rohres zu ermöglichen.

Die EP 0 856 118 B1 befasst sich mit einem Rohrinnenmanipulator zum Prüfen oder Bearbeiten der Innenoberfläche eines Rohres, bei dem an einem innerhalb des Rohres fahrbaren Fahrgestell ein mehrgliedriger Schwenkarm in Richtung einer Längsachse des Fahrgestells verschiebbar angeordnet ist, der an seinem freien Ende einen Systemträger für ein Prüfsystem oder eine Arbeitsvorrichtung trägt und wenigstens teilweise in einen Innenraum des Fahrgestells einfahrbar ist. Zum Verschieben des Schwenkarms ist eine innerhalb des Fahrgestells drehbar gelagerte Gewindespindel vorgesehen, auf welcher der Schwenkarm gelagert ist.

Die CN 112 128 512 B offenbart einen Rohrleitungsroboter und eine Rohrleitungsinspektionsausrüstung. Der Rohrleitungsroboter umfasst einen Hauptmaschinenkörper, ein Sichtmodul, ein Antriebsmodul und ein Steuermodul. Das Sichtmodul ist auf dem Hauptmaschinenkörper angeordnet, das Antriebsmodul umfasst zwei Antriebsmotoren und Antriebsradsätze, die entsprechend drehbar an den beiden Seiten des Hauptmaschinenkörpers angeordnet sind, die beiden Antriebsmotoren stehen entsprechend in Übertragungsverbindung mit den beiden Antriebsradsätzen. Die Antriebsräder der Antriebsradsätze stehen über ein Übertragungsstück an der Außenseite des Hauptmaschinenkörpers in Übertragungsverbindung.

Aus der CN 209 557 886 U ist ein Power-Pipeline-Roboter mit einer Hauptwelle und einer Steuerung bekannt. Auf der Außenfläche der Hauptwelle sind in Umfangsrichtung drei Raupenvorrichtungen angeordnet. An einem Ende der Welle befindet sich eine Schaufel zum Entfernen von Fremdkörpern. Am anderen Ende der Welle ist eine Positionseinstellvorrichtung angeordnet.

Aus der WO 2012/112835 A1 ist ein Rohrroboter aus austauschbarer Modulen bekannt, einschließlich eines Rahmenmoduls und mindestens eines von einem ersten Schultermodul, einem ersten Gelenkmodul und einem ersten Handmodul. Eine Modulsteuereinheit zum Einbetten von Intelligenz ist in jedem der austauschbaren Module angeordnet. Jedes der austauschbaren Module hat ein proximales Ende, ein mittleres und ein distales Ende. Jede der Modulsteuereinheiten ist so konfiguriert, dass sie Signale von jedem der austauschbaren Module sendet und empfängt.

Aus der WO 2021/052868 A1 ist ein Kanalerkundungsroboter bekannt, welcher aus zwei mit ein- und ausfahrenden Stützmodulen versehenen, zylindrische Gehäuse aufweisenden Segmenten und einem zwischen diesen Segmenten angeordneten Positionierungssystem besteht. Jedes Stützmodul umfasst drei über den Umfang des jeweiligen Segmentes um 60° zueinander versetzt ein- und ausfahrbare Scherenhübe, die jeweils 1,5-fache Scherenhübe sind, die aus den Segmenten radial ausfahrbar sind, sodass ihr Hub durch den Durchmesser der Segmente begrenzt ist. Das die Lage der beiden Segmente zueinander einstellbare Positioniersystem weist zumindest ein Paar von Linearaktuatoren auf, die parallel zur Längsachse des Roboters orientiert sind, mit einem der Segmente gekoppelt sind, um durch voneinander unabhängige Translationsbewegungen dieses Segment relativ zum anderen Segment positionieren zu können.

Der Erfindung liegt die Aufgabe zugrunde, einen Roboter zur grabenlosen Rohrleitungs- und Schachtsanierung zur Verfügung zu stellen, welcher in unterschiedlich dimensionierten Rohrleitungen und Schächten einsetzbar und in diesen exakt bewegbar ist, dabei besonders gut und verlässlich an der Innenwand der Rohrleitung bzw. des Schachtes abstützbar ist und an einer beliebigen Stelle im Rohr oder Schacht zentriert positionierbar ist, um Sanierungsarbeiten durchzuführen.

Gelöst wird die gestellte Aufgabe mit einem Roboter gemäß Anspruch 1, welcher mindestens ein Vorschub-Segment zwischen zwei Ausdehnungs-Segmenten aufweist, wobei jedes Vorschub-Segment einen selbsthemmenden Vorschub-Mechanismus zum Vergrößern oder Verkleinern des Abstands der beiden, an das Vorschub-Segment gekoppelten Ausdehnungs-Segmente aufweist, wobei der Vorschub-Mechanismus einen Kolben aufweist, welcher an dem einen Ende eines Verbindungsstücks montiert ist und durch einen Spindeltrieb vor und zurück verschiebbar ist.

Die Gesamtkonstruktion des Roboters aus mindestens zwei Ausdehnungs-Segmenten mit Doppelscherenhüben, mit jeweils einem zwischen den Ausdehnungs-Segmenten positionierten Vorschub-Segment und mit einem Ausdehnungs-Segment als vorderstes Segment ermöglicht einerseits eine "wurmartige" Fortbewegung des Roboters im Rohr oder Schacht und andererseits eine exakte Positionierung des vordersten Segments an einer bestimmten Stelle. Die Doppelscherenhübe in den Ausdehnungs-Segmenten und deren Orientierung und Betätigung über in Bewegungsrichtung des Roboters verlaufende Spindeln gestatten einen großen Hub, sodass der Roboter in Rohren und Schächten unterschiedlichster Dimensionen einsetzbar ist. Darüber hinaus ermöglichen die Doppelscherenhübe an ihren äußeren Enden eine Anordnung von Abstützelementen, wie Füßen, parallel zur Bewegungsrichtung des Roboters, wodurch eine besonders gute und zuverlässige Abstützung der Doppelscherenhübe an der Rohr- bzw. Schachtinnenwand sichergestellt ist. Die Vorschub-Segmente ermöglichen durch ein simples Bewegen der Verbindungsstücke die schrittweise Bewegung des Roboters im Rohr bzw. Schacht.

Bei einer besonders bevorzugten Ausführung weisen die Ausdehnungs-Segmente jeweils zwei in entgegengesetzte Richtung ausdehnbare Doppelscherenhübe auf, welche über die Spindel gemeinsam betätigbar sind. Diese Maßnahme ist für einen Einsatz des Roboters in Rohrleitungen und Schächten mit besonders großem Innendurchmesser von besonderem Vorteil.

Erfindungsgemäß sind sämtliche Segmente des Roboters durch Verbindungsstücke miteinander gekoppelt, welche insbesondere versteifte und verdrehsteife Schlauchstücke sind. Derartige Verbindungsstücke zwischen den Segmenten machen den Roboter ausgesprochen beweglich für ein Bewegen durch Biegungen im Rohr oder Schacht.

Bei einer weiteren vorteilhaften Ausführung des Roboters ist an dem das vorderste Segment bildenden Ausdehnungs-Segment eine Hubvorrichtung mit einem an dieser montierten, mit zumindest einem Werkzeug und/oder Messgerät versehenen Kopf vorgesehen, wobei die Hubvorrichtung insbesondere zum Drehen und/oder zum Heben und Senken des Kopfes ausgebildet ist, sodass der Kopf, beispielsweise zur Durchführung von Fräsarbeiten, besondere exakt positioniert werden kann.

Bevorzugt weist die Hubvorrichtung ein Antriebselement und eine Verriegelungsvorrichtung auf, wobei das Antriebselement mit der Verriegelungsvorrichtung mittels einer Verbindungswelle verbunden ist, sodass die Hubvorrichtung entsprechend angesteuert werden und bei Bedarf auch entriegelt werden kann, etwa um einen Defekt bei von außen wirkenden Kräften zu verhindern.

Gemäß einer weiteren bevorzugten Ausführung des Roboters schließen an die Hubvorrichtung zwei durch ein Verbindungsstück miteinander gekoppelte Ausdehnungs-Segmente an. Auf diese Weise kann der Vorderteil des Roboters auf besonders stabile Weise und optimal zentriert an der jeweils gewünschten Stelle positioniert werden.

Diesbezüglich ist es auch von besonderem Vorteil, wenn diese beiden aufeinanderfolgenden Ausdehnungs-Segmente und ggf. weitere vorgesehene und aufeinanderfolgende Ausdehnungs-Segmente zueinander verdrehbar sind. Eine derartige gegenseitige Verdrehung ist insbesondere bei den beiden an die Hubvorrichtung anschließenden Ausdehnungs-Segmenten von Vorteil.

Bei einer weiteren bevorzugten Ausführung des Roboters ist vorgesehen, dass er mindestens zwei, jeweils zwischen zwei Ausdehnungs-Segmenten befindliche Vorschub-Segmente aufweist. Auf diese Weise wird die schrittweise, "wurmartige" Fortbewegung des Roboters quasi geglättet, sodass etwa durch eine Ansteuerung des vordersten Ausdehnungs-Segmentes dieses Segment fließend bewegt und insbesondere der Kopf gleichmäßig und kontinuierlich vor und zurück bewegt werden kann.

Der hinterste bzw. rückwärtige Bestandteil des Roboters ist insbesondere ein Stecker-Segment, an welchem ein Haupt-Verbindungsstecker eines Versorgungskabels, welches vorzugsweise in Form eines Schiebekabels ausgebildet ist, ansteckbar ist.

Besonders vorteilhaft ist eine Ausführung des Roboters mit einer Notstrom-Versorgung mit Elektronik, welche vorzugsweise im Stecker-Segment enthalten ist und zum temporären Weiterversorgen der internen Steuerungskomponenten bei einem Wegbrechen der Stromversorgung vorgesehen ist, um die Doppelscherenhübe der selbsthemmenden Ausdehnungs-Segmente, die selbsthemmenden Vorschub-Mechanismen der Vorschub-Segmente zusammenzufahren und auch gegebenenfalls die Hubvorrichtung zu entriegeln. Dadurch ist sichergestellt, dass der Roboter im Falle eines Unterbrechens der Stromversorgung aus dem Rohr bzw. Schacht beschädigungsfrei herausgezogen werden kann.

Zu den am Kopf des Roboters montierten Werkzeugen und/oder Messgeräten gehört zumindest eines der folgenden: ein Ultraschall-Messgerät zur Messung der Dicke der Rohrwand, ein Laser-Messgerät zur 3D-Vermessung des Rohres und von Ablagerungen, eine starke Lichtquelle zum punktuellen Aushärten eines Harzschlauches, ein Laser zum Wegschneiden von Material oder zum Gravieren der Rohrwand, ein Motor mit Bürste oder einem Fräskopf.

Zusätzlich ist es von Vorteil, wenn am Kopf ein Bildsensor mit Blick auf das/die Werkzeug(e) montiert ist, zum Übertragen eines Live-Bildes an eine Bedieneinheit und zum Positionieren des Roboters an einer bestimmten Stelle.

Besonders bedienungsfreundlich ist eine Ausführung des Roboters, bei welcher eine programmierte Ansteuerung zum automatischen Anfahren einer definierten Stelle im Rohr- oder Schachtsystem und/oder zum autonomen Abfräsen oder Abschleifen von Rohr- bzw. Schachtwänden in zuvor definierten Bereichen vorgesehen ist.

Die Erfindung wird nachfolgend anhand der Figuren näher beschrieben. Dabei zeigen
Fig. 1 eine Ansicht einer Ausführungsvariante des Roboters,
Fig. 2 eine Ansicht einer weiteren Ausführungsvariante des Roboters,
Fig. 3 eine Explosionsansicht des Mechanismus einer Hubvorrichtung,
Fig. 4 eine Ansicht des Mechanismus zum Ver- oder Entriegeln eines beweglichen Teils der Hubvorrichtung,
Fig. 5 eine Ansicht des Mechanismus zur Ausdehnung von Ausdehnungs-Segmenten und
Fig. 6 einen vollständigen Schritt der wurmartigen Fortbewegung des Roboters.

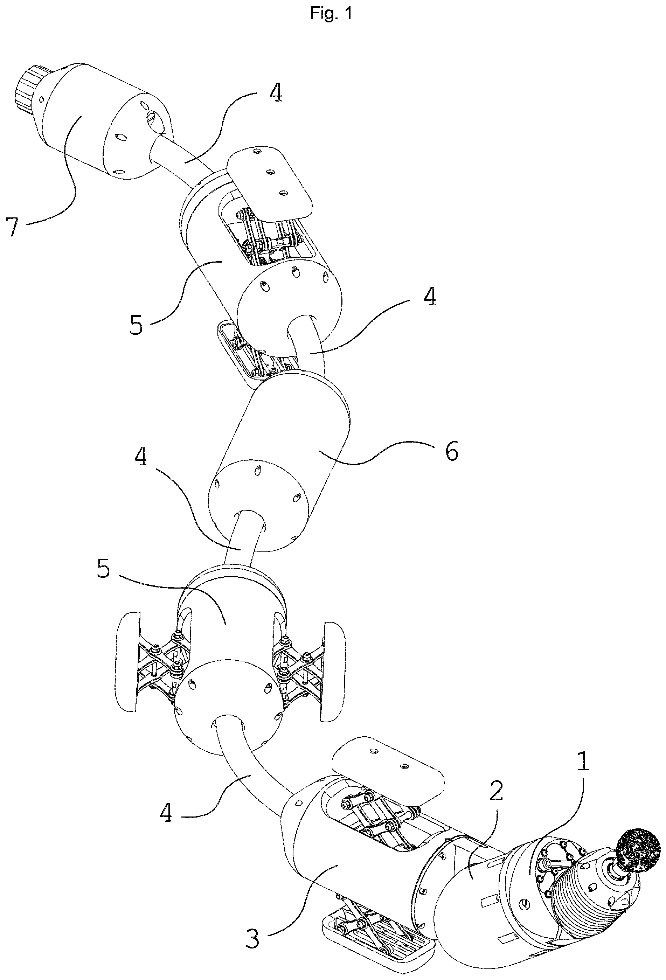

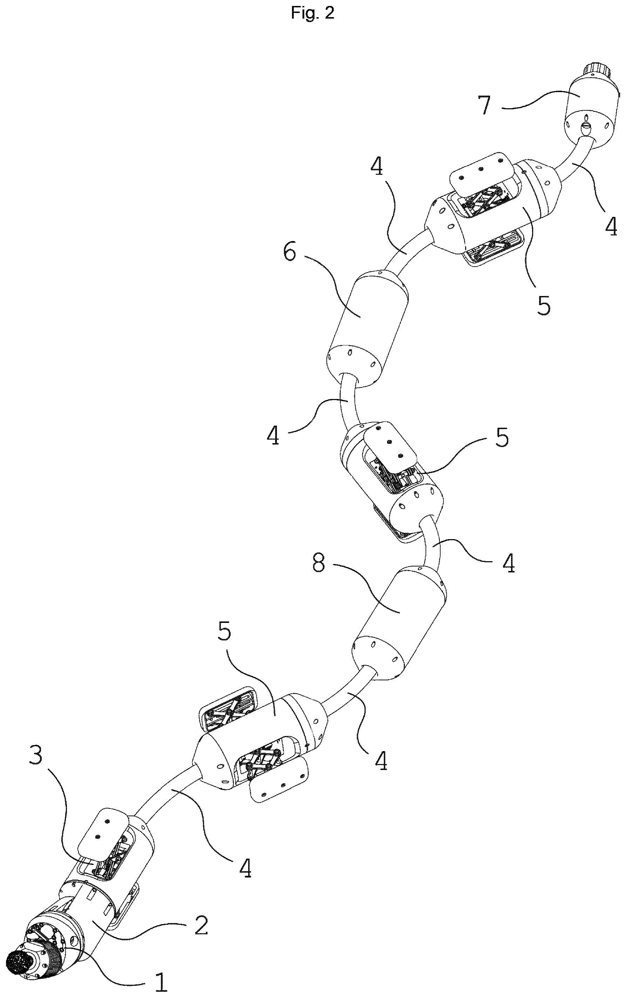

Der Roboter weist einen Kopf 1 (Fig. 1, Fig. 2) auf, an welchem diverse Werkzeuge und Messgeräte montiert sein können, wie beispielsweise ein Ultraschall-Messgerät zur Messung der Dicke der Rohrwand, ein Laser-Messgerät zur 3D-Vermessung des Rohres und Ablagerungen inkl. genauer Schadensbilder, eine starke Lichtquelle zum punktuellen Aushärten bspw. eines Harzschlauches, ein Laser zum Wegschneiden von Material oder Gravieren der Rohrwand oder ein Motor mit Bürste oder einem Fräskopf, aber vorzugsweise befindet sich darin auch immer ein Bildsensor mit Blick auf das Werkzeug. Der Bildsensor und das, an die Bedieneinheit übertragene, Live-Bild ist nicht nur zur Steuerung bei Verwendung eines Werkzeugs notwendig, sondern auch um den Roboter im Rohr an der richtigen Stelle zu positionieren.

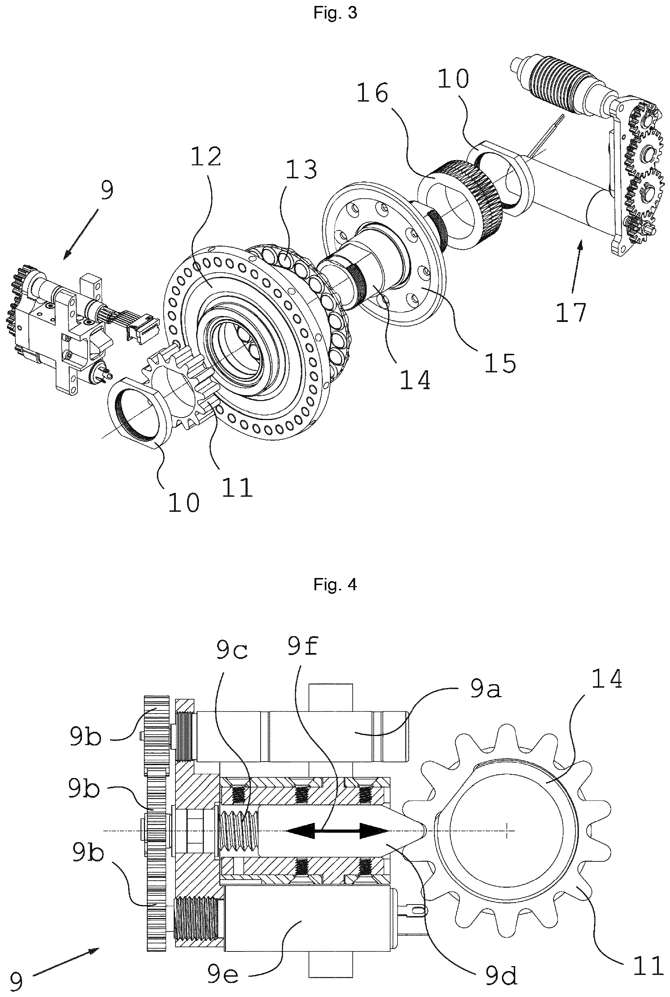

Der Kopf 1 ist an einer Hubvorrichtung 2 befestigt, die in Kombination mit einer Drehvorrichtung, bspw. im an die Hubvorrichtung 2 gekoppelten Segment 3, eine Steuerung des Kopfes 1 in mindestens zwei Achsen ermöglicht. Die Hubvorrichtung 2 kann je nach benötigter Kraft auf unterschiedliche Art ausgeformt sein und unterschiedliche Arten von Getrieben beinhalten. In der in Fig. 3 gezeigten Ausführungsvariante besteht die Hubvorrichtung 2 aus zwei Baugruppen, einem starren und einem beweglichen Teil. Die Verdrehung zwischen den Teilen wird durch ein Schneckengetriebe 17 ermöglicht, welches selbsthemmend ist und daher blockieren würde, wenn der Roboter mit Gewalt ins Rohr geschoben oder aus dem Rohr gezogen wird, ohne dass per Steuerung, passend zur Geometrie der Rohrleitung, vor allem in Bögen, die Hubvorrichtung 2 entsprechend gesteuert wird. Daher befindet sich im nicht angetriebenen Teil eine Verrieglungsvorrichtung 9, welche die Welle 14 und den sie beherbergenden Teil 12 bzw. 15 so entkoppeln kann, dass die Teile zwar noch verbunden sind, doch das Durchdrehen der Welle 14 ermöglicht wird bzw. die Rotation der Welle 14 bis zur erneuten Verriegelung nicht mehr auf das Teil übertragen wird. Die Hubvorrichtung 2 kann während des entriegelten Zustands durch äußere Kräfte, wie sie bspw. beim Verschieben des Roboters im Rohr bei Bögen und Abzweigen auftreten, bewegt werden, ohne dass das selbsthemmende Schneckengetriebe 17 dadurch belastet wird bzw. die Welle 14 blockiert.

Um den Kopf 1 im Rohr, insbesondere in großen Rohren, an jede gewünschte Stelle bewegen zu können, muss der Vorderteil des Roboters im Rohr zentriert werden. Diese Aufgabe übernimmt das Segment 3, an welches die Hubvorrichtung 2 und somit auch der Kopf 1 montiert sind und das optional noch über einen Mechanismus zur Drehung verfügt. Das Segment muss dazu über einen Mechanismus verfügen, mit dem eine Ausdehnung im Rohr möglich ist. In dieser Ausführungsvariante dient dazu ein zweifacher Doppelscherenhub 18. In eine und in die gegengesetzte Richtung können Füße ausgedehnt werden, die dann die Rohrwand berühren und das Segment und somit den gesamten Vorderteil führen und zentrieren. Durch die Verwendung von Doppelscherenhüben kann eine ausreichend große Änderung des Querschnitts des Segments 3 erzielt werden und der Roboter für mehrere Rohrdimensionen verwendet werden. Bei bisher bekannten Systemen, die vorwiegend pneumatisch angetrieben werden, kommen zur Ausdehnung des Segments 3 Luftblasen aus Gummi zum Einsatz, welche jedoch das Rohr verschließen und abdichten und ein Abrinnen von angestautem Wasser oder einem anderen Medium verhindern. Durch die Doppelscherenhübe 18, die nicht den gesamten Durchmesser des Ausdehnungs-Segments 3 vergrößern, kann weiterhin ein Abfließen des Mediums ermöglicht und ein Rückstau verhindert werden. An den Füßen, welche an die Rohrwand gedrückt werden können, aber ggf. auch im ausgefahrenen Zustand wieder ein wenig gelockert werden können, um ein Vor- oder Zurückgleiten beim Verschieben des Vorderteils zu erleichtern, sollten im Falle des vorderen Ausdehnungs-Segments 3 möglichst gute Gleiteigenschaften in Kombination mit der Rohrwand aufweisen. Sie könnten bspw. aus Metall oder Kunststoff gefertigt werden.

Verbunden werden sämtliche Segmente des Roboters über Verbindungsstücke 4, wie beispielsweise versteifte und vor allem verdrehsteife Schlauchstücke.

Die weiteren Segmente 5 sind dem vorderen Segment 3 sehr ähnlich, verfügen ebenfalls über Mechanismen zur Ausdehnung und dem Fixieren im Rohr, doch sollten bei deren Füßen möglichst hohe Hafteigenschaften erzielt werden, bspw. durch Verwendung von Gummi-Füßen, denn diese Segmente 5 sind notwendig, damit der Roboter sich in einem Rohr halten und eigenständig vor- und zurückbewegen kann. Weiters müssen diese Segmente 5 nicht zwingend über Drehungen verfügen. In den in Fig. 1 und 2 abgebildeten Ausführungsformen verfügen sie jedoch über Drehungen, damit der Roboter sich durch abwechselndes Auf- und Zufahren der Füße der diversen Segmente 5 in Kombination mit den Drehungen und ggf. einem Gyroskop-Sensor zur Lageerkennung, vertikal ausrichten kann. Bei Verwendung von zwei Doppelscherenhüben 18, ist es von Vorteil, wenn das Segment 5 bzw. 3 so ausgerichtet wird, dass die Scherenhübe nach oben und unten ausgedehnt werden, da sonst durch die Scherung an der Rohrwand seitliche Kräfte auftreten, die für die Mechanik der Doppelscherenhübe 18 schädlich sein können und die Ausdehnungskraft der Doppelscherenhübe 18 verringert sich bei schiefer Lage im Rohr.

Wie in Fig. 1 und 2 abgebildet, kann es jedoch von Vorteil sein, eines der beiden vordersten Segmente 3 bzw. 5 bewusst um beispielsweise 90 Grad verdreht, somit liegend, zu orientieren, da dadurch die Stabilität des Vorderteils erhöht werden kann, insbesondere wird das seitliche Wackeln des Vorderteils, vor allem beim Fräsen oder Bürsten mit einem entsprechenden Werkzeug am Kopf 1, verringert. Hierzu macht es Sinn diese beiden vordersten Segmente 3 bzw. 5 hintereinander, ohne Vorschub-Segment 6 dazwischen, zu koppeln, damit die Stabilisierungswirkung möglichst groß ist.

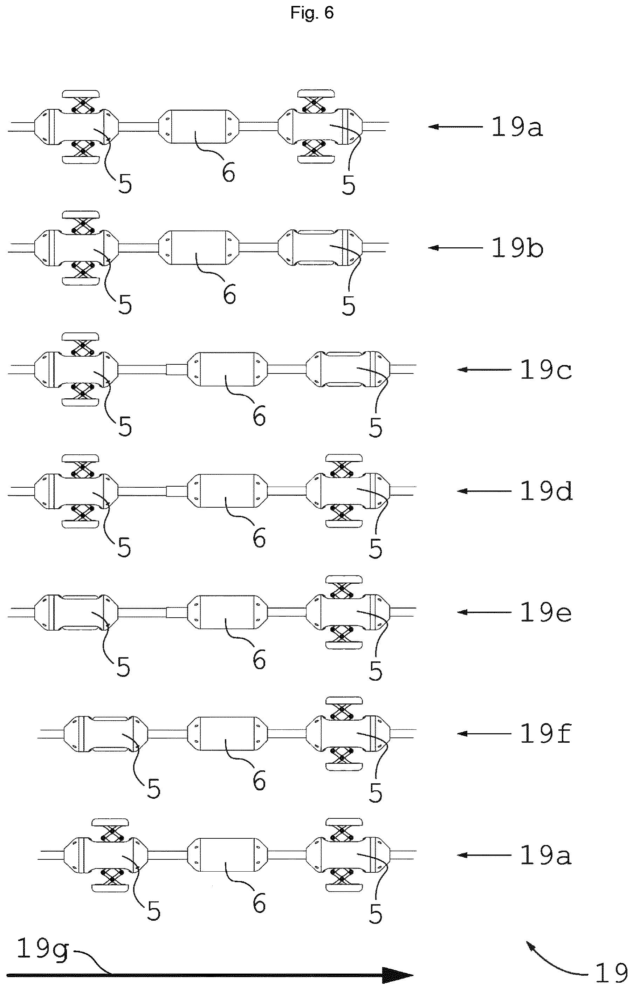

Die Vorschub-Segmente 6 ermöglichen, in Kombination mit den Ausdehnungs-Segmenten 3 bzw. 5, einen schrittweisen, wurmartigen Antrieb wie in Fig. 6 dargestellt. Der Vorschub-Mechanismus zum Vergrößern oder Verkleinern des Abstands der beiden, an den Vorschub 6 gekoppelten, Ausdehnungs-Segmente 5 ist in dieser Ausführungsform so umgesetzt, dass ein eingedichteter Kolben, an dem ein Ende eines Verbindungsstücks 4 montiert ist, durch einen Spindeltrieb vor und zurück verschoben werden kann.

Das Stecker-Segment 7 ist der hinterste Teil des Roboters, an dem der Haupt-Verbindungsstecker des Versorgungskabels, welches vorzugsweise in Form eines Schiebekabels ausgebildet ist, angesteckt wird. Außerdem beinhaltet das Stecker-Segment 7 in dieser Ausführungsvariante eine Notstromversorgung mit Elektronik zur Überwachung der Hauptversorgung. Durch die Verwendung von teils selbsthemmenden Getrieben und dem Verspannen des Roboters im Rohr, könnte das Gerät z.B. im Falle eines Leitungsbruchs oder Defekts der Versorgungseinheit nicht mehr ohne Freilegung des Rohres oder Zerstören des Geräts aus dem Rohr entfernt werden. Deshalb wird eine Notstromversorgung so ausgelegt, dass diese ausreichend Energie speichern kann um in einem solchen Fall die selbsthemmenden Ausdehnungs-Mechanismen der Ausdehnungs-Segmente 3 und 5 sowie die selbsthemmenden Vorschub-Mechanismen der Vorschub-Segmente 6 wieder zusammenzufahren und ggf. die Hubvorrichtung 2 zu entriegeln. Dadurch ist der Roboter wieder so kompakt und bogengängig wie möglich und kann wieder aus dem Rohr entfernt werden. Beispielsweise kann die Notstrom-Versorgung aus Kondensatoren bestehen, die vielen Ladezyklen standhalten und im Vergleich zu herkömmlichen Akkumulatoren eine deutlich geringere Ladedauer aufweisen.

Fig. 1 zeigt den Roboter umfassend mehrere Ausdehnungs-Segmente 3 bzw. 5, ein Vorschub-Segment 6 sowie ein weiteres Segment 7, welche mit Verbindungsstücken 4 gekoppelt sind. In dieser Ausführungsform werden versteifte Schläuche als Verbindungsstücke 4 verwendet. Das Vorderteil des Roboters besteht aus einem Ausdehnungs-Segment 3 zur radialen Verspannung im Rohr, einer Hubvorrichtung 2 und dem daran fixierten Kopf 1. In dieser Ausführungsform umfasst der Kopf 1 einen Bildsensor mit entsprechender Linse, eine Beleuchtung sowie einen Scheibenwischer zum Reinigen von Verschmutzungen am Schutzglas vor der Linse sowie einen Fräsmotor mit Fräswerkzeug.

Fig. 2 zeigt eine erweiterte Ausführungsform gegenüber Fig. 1, umfassend ein weiteres Ausdehnungs-Segment 5 sowie ein weiteres Vorschub-Segment 8, welches die schrittweise Fortbewegung glätten kann, die durch das Zusammenspiel von mindestens zwei Ausdehnungs-Segmenten 3 bzw. 5 und mindestens einem Vorschub-Segment 6 resultiert, sodass der Vorderteil des Roboters, insb. der Kopf 1 gleichmäßig und kontinuierlich vor und zurück bewegt werden kann.

Fig. 3 zeigt eine Explosionsansicht des Mechanismus des Hubs 2. Der Hub 2 umfasst einen starren, mit dem ein Lagereinsatz 15, und einen beweglichen Teil, mit dem ein Lagereinsatz 12 verbunden wird. Zueinander optional noch mit einem Axiallager 13 gelagert und verspannt, um die Stabilität des gesamten Konstrukts zu erhöhen. An der vom starren in den beweglichen Teil durchragenden Hohlwelle 14 wird auf einem Ende ein Schneckenrad 16 und am anderen Ende ein Rastrad 11 montiert und in dieser Ausführungsform mit Muttern 10 gesichert. Eine Vorrichtung 9 bildet in Verbindung mit dem Rastrad 11 einen Verrieglungsmechanismus (Fig. 4) um den beweglichen Teil, mit dem der Lagereinsatz 12 verbunden ist, mechanisch, radial mit der Welle 14 zu koppeln oder zu entkoppeln. Angetrieben wird die Hohlwelle 14 durch eine Antriebseinheit 17 mit Schnecke auf der Seite des Schneckenrads 16 und wenn die Hohlwelle 14 und der bewegliche Teil des Hubs durch den Verrieglungsmechanismus (Fig. 4) radial verriegelt sind, kann somit durch Ansteuerung der Antriebseinheit 17 der bewegliche Teil des Hubs in Relation zum starren Teil gezielt bewegt und positioniert werden. Die Hohlwelle 14 bietet die Möglichkeit Kabel oder medienführende Leitungen durch den ganzen Hub 2 zu führen.

Fig. 4 zeigt den Mechanismus zum Ver- oder Entriegeln des beweglichen Teils des Hubs 2 und der Hohlwelle 14, umfassend einen Motor 9a, ein Potentiometer 9e und eine Gewindespindel 9c, welche über ein Getriebe, in dieser Ausführungsform bestehend aus Zahnrädern 9b, gekoppelt sind. Ein Rastelement 9d, welches mit dem Rastrad 11 eine formschlüssige Verbindung eingehen kann, wird entlang der Achse der Gewindespindel 9c, durch Drehung dergleichen, linear verschoben, wie es die Pfeile 9f verdeutlichen. Das Potentiometer 9e dient zur Positionsstellung des Rastelements 9d, jedoch kann stattdessen auch der Motor 9a bspw. über einen Encoder verfügen oder die Stellung des Rastelements wird per Anpresskraft oder zeitlich definiert.

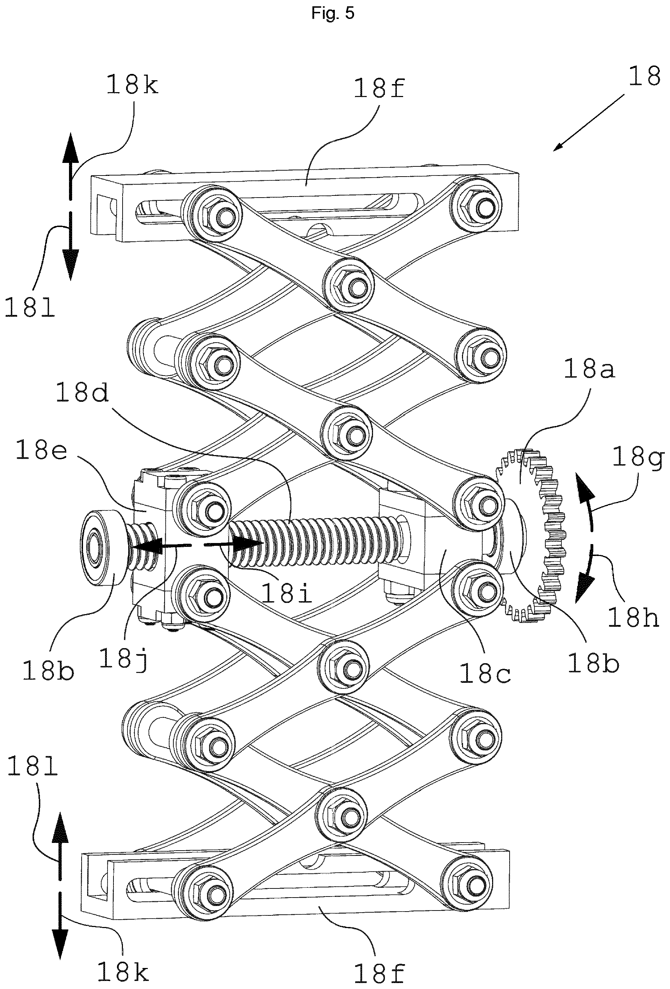

Fig. 5 zeigt den Mechanismus zur Ausdehnung der Segmente 3 und 5. Die Spindel 18d wird durch die Lager 18b in einem Segment 3 oder 5 drehbar gelagert und kann über das Zahnrad 18a angetrieben werden. In dieser Darstellung ist der Rest des Segments 3 bzw. 5 ausgeblendet und die Scherenhübe sind an Block 18c montiert, der sonst ein Teil des Segment-Gehäuses wäre, welches aber zur verständlicheren Darstellung ausgeblendet ist. Der Block 18c und die beiden Lager 18b sind in ihrer Position unveränderlich fixiert. Durch den Antrieb der Spindel 18d verfährt die Mutter 18e entlang der Achse der Spindel 18d. Die beiden Montageteile 18f der Segment-Füße sind mit der verfahrbaren Mutter 18e und dem starren Block 18c durch Doppelscherenhübe verbunden. Durch eine Drehung in Richtung 18g am Zahnrad 18a wird die Mutter 18e in Richtung 18i verschoben, diese Bewegung wird durch die Doppelscherenhübe umgelenkt und die Montageteile 18f der Segment-Füße bewegen sich in Richtung 18k. Ebenso umgekehrt, wenn das Zahnrad 18a und die damit verbundene Spindel 18d in Richtung 18h gedreht werden, wird die Mutter 18e in Richtung 18j verschoben und die Montageteile 18f werden von den Doppelscherenhüben in Richtung 18I bewegt. Die Drehung in Richtung 18g verursacht somit eine Ausdehnung des Segments 3 oder 5 bzw. der Segment-Füße und die Drehung in Richtung 18h das Zusammenziehen.

Fig. 6 zeigt einen vollständigen Schritt der wurmartigen Fortbewegung 19 in Richtung 19g.

Zu Beginn, in Position 19a sind noch beide Ausdehnungs-Segmente 5 ausgedehnt, sprich im Rohr oder Schacht verspreizt, und das Vorschub-Segment 6 zusammengezogen.

In Position 19b ist das, in Richtung 19g, vordere, in dieser Darstellung das rechte, Ausdehnungs-Segment 5 zusammengefahren und bereit zum Verschieben, da es nicht mehr verspreizt ist.

In Position 19c ist das Vorschub-Segment 6 axial ausgedehnt und hat beim Ausdehnen das vordere, zusammengezogene Ausdehnungs-Segment 5 mitverschoben.

In Position 19d sind wieder beide Ausdehnungs-Segmente 5 ausgedehnt und im Rohr oder Schacht verspreizt.

In Position 19e ist das hintere, in dieser Darstellung das linke, Ausdehnungs-Segment 5 zusammengefahren und bereit zum Verschieben.

In Position 19f ist das Vorschub-Segment 6 wieder zusammengefahren und hat dabei das hintere, zusammengefahrene Ausdehnungs-Segment 5 mitgezogen. Anschließend dehnt sich das hintere Ausdehnungs-Segment 5 wieder aus und der Roboter befindet sich wieder im Anfangszustand 19a, jedoch um einen Schritt weiter in Richtung 19g versetzt.

Zu jeder Zeit war mindestens ein Ausdehnungs-Segment 5 ausgedehnt und hat den Roboter im Rohr oder Schacht fixiert um ein Ver- oder Abrutschen des Roboters zu verhindern.

## Patentansprüche

1. Roboter zur grabenlosen Rohrleitungs- und Schachtsanierung mit
mindestens zwei Ausdehnungs-Segmenten (3, 5) mit
je einem selbsthemmenden Ausdehnungs-Mechanismus mit zumindest einem Doppelscherenhub (18) zum Verspreizen und Andrücken an der Rohr- bzw. Schachtwand,
einem Ausdehnungs-Segment (3) als vorderstes Segment,
wobei der Ausdehnungs-Mechanismus zur Betätigung des Doppelscherenhubs (18) eine Spindel (18d) aufweist, welche im Ausdehnungs-Segment (3, 5) in der Fortbewegungsrichtung (19g) des Roboters orientiert drehbar gelagert ist und wobei sämtliche Segmente (3, 5) über Verbindungsstücke (4) miteinander gekoppelt sind,
mit mindestens einem Vorschub-Segment (6) zwischen zwei Ausdehnungs-Segmenten (3, 5),
**dadurch gekennzeichnet, dass**
jedes Vorschub-Segment (6) einen selbsthemmenden Vorschub-Mechanismus zum Vergrößern oder Verkleinern des Abstands der beiden, an das Vorschub-Segment (6) gekoppelten Ausdehnungs-Segmente (5) aufweist, wobei der Vorschub-Mechanismus einen Kolben aufweist, welcher an dem einen Ende eines Verbindungsstücks (4) montiert ist und durch einen Spindeltrieb vor und zurück verschiebbar ist.

2. Roboter nach Anspruch 1, **dadurch gekennzeichnet, dass** die Ausdehnungs-Segmente (3, 5) jeweils zwei in gegengesetzte Richtungen ausdehnbare Doppelscherenhübe (18) aufweisen, welche über die Spindel (18d) gemeinsam betätigbar sind.

3. Roboter nach Anspruch 1, **dadurch gekennzeichnet, dass** die Verbindungsstücke (4) versteifte und verdrehsteife Schlauchstücke sind.

4. Roboter nach Anspruch 1, **dadurch gekennzeichnet, dass** an dem das vorderste Segment bildenden Ausdehnungs-Segment (3) eine Hubvorrichtung (2) mit einem an dieser montierten, mit zumindest einem Werkzeug und/oder Messgerät versehenen Kopf (1) vorgesehen ist, wobei die Hubvorrichtung (2) insbesondere zum Drehen und/oder zum Heben und Senken des Kopfes (1) ausgebildet ist.

5. Roboter nach Anspruch 4, **dadurch gekennzeichnet, dass** die Hubvorrichtung (2) ein Antriebselement (17) und eine Verriegelungsvorrichtung (9) aufweist, welche mit einer Verbindungswelle (14) miteinander verbunden sind.

6. Roboter nach Anspruch 4 oder 5, **dadurch gekennzeichnet, dass** an die Hubvorrichtung (2) zwei durch ein Verbindungsstück (4) miteinander gekoppelte Ausdehnungs-Segmente (3) anschließen.

7. Roboter nach einem der Ansprüche 1 bis 6, **dadurch gekennzeichnet, dass** er mindestens zwei, jeweils zwischen zwei Ausdehnungs-Segmenten (3, 5) befindliche Vorschub-Segmente (6, 8) aufweist.

8. Roboter nach einem der Ansprüche 1 bis 7, **dadurch gekennzeichnet, dass** mindestens zwei der aufeinander folgende Ausdehnungs-Segmente (3, 5) zueinander verdrehbar sind, insbesondere um diese Ausdehnungs-Segmente (3, 5) um 90 Grad zueinander zu verdrehen.

9. Roboter nach Anspruch 1, **dadurch gekennzeichnet, dass** sein hinterster Teil ein Stecker-Segment (7) ist, an dem ein Haupt-Verbindungsstecker eines Versorgungskabels, welches vorzugsweise in Form eines Schiebekabels ausgebildet ist, ansteckbar ist.

10. Roboter nach einem der Ansprüche 1 bis 9, **dadurch gekennzeichnet, dass** er eine Notstrom-Versorgung mit Elektronik aufweist, welche vorzugsweise im Stecker-Segment (7) enthalten ist zum temporären Weiterversorgen interner Steuerungskomponenten bei einem Wegbrechen der Versorgung, um die Doppelscherenhübe (18) der selbsthemmenden Ausdehnungs-Segmente (3 und 5) sowie die selbsthemmenden Vorschub-Mechanismen der Vorschub-Segmente (6) zusammenzufahren und ggf. die Hubvorrichtung (2) zu entriegeln.

11. Roboter nach Anspruch 4, **dadurch gekennzeichnet, dass** zu den am Kopf (1) montierten Werkzeugen und/oder Messgeräten zumindest eines der folgenden gehört: ein Ultraschall-Messgerät zur Messung der Dicke der Rohrwand, ein Laser-Messgerät zur 3D-Vermessung des Rohres und von Ablagerungen, eine starke Lichtquelle zum punktuellen Aushärten eines Harzschlauches, ein Laser zum Wegschneiden von Material oder zum Gravieren der Rohrwand, ein Motor mit Bürste oder einem Fräskopf.

12. Roboter nach Anspruch 4 oder 11, **dadurch gekennzeichnet, dass** am Kopf (1) ein Bildsensor mit Blick auf das/die Werkzeug(e) montiert ist, zum Übertragen eines Live-Bildes an eine Bedieneinheit und zum Positionieren des Roboters an einer bestimmten Stelle.

13. Roboter nach einem der Ansprüche 1 bis 12, **gekennzeichnet durch** eine programmierte Ansteuerung zum automatischen Anfahren einer definierten Stelle im Rohr- oder Schachtsystem und/oder zum autonomen Abfräsen oder Abschleifen von Rohr- bzw. Schachtwänden in zuvor definierten Bereichen.

## Claims

1. Robot for trenchless pipeline and manhole rehabilitation
with at least two expansion segments (3, 5), each with a self-locking expansion mechanism with at least one double scissor lift (18) for spreading and pressing against the pipe or manhole wall,
an expansion segment (3) as the foremost segment,
wherein the expansion mechanism for actuating the double scissor lift (18) has a spindle (18d), which is rotatably mounted in the expansion segment (3, 5) in a manner oriented in the direction of travel (19g) of the robot,
and wherein all segments (3, 5) are coupled to one another via connecting pieces (4),
with at least one feed segment (6) between two expansion segments (3, 5),
**characterised in**
**that** each feed segment (6) has a self-locking feed mechanism for increasing or decreasing the distance between the two expansion segments (5) coupled to the feed segment (6), wherein the feed mechanism has a piston which is mounted on the one end of a connecting piece (4) and is displaceable back and forth by a spindle drive.

2. Robot according to claim 1, **characterised in that** the expansion segments (3, 5) each have two double scissor lifts (18) that can be expanded in opposite directions, which can be jointly actuated via the spindle (18d).

3. Robot according to claim 1, **characterised in that** the connecting pieces (4) are stiffened and torsionally stiff hose pieces.

4. Robot according to claim 1, **characterised in that** on the expansion segment (3) forming the foremost segment, a lifting device (2) with a head (1) mounted thereon and provided with at least one tool and/or measuring device is provided, wherein the lifting device (2) is configured in particular to rotate and/or to raise and lower the head (1).

5. Robot according to claim 4, **characterised in that** the lifting device (2) has a drive element (17) and a locking device (9) which are connected to one another by means of a connecting shaft (14).

6. Robot according to claim 4 or 5, **characterised in that** two expansion segments (3) coupled to one another by a connecting piece (4) are connected to the lifting device (2).

7. Robot according to any of claims 1 to 6, **characterised in that** it has at least two feed segments (6, 8) located in each case between two expansion segments (3, 5).

8. Robot according to any of claims 1 to 7, **characterised in that** at least two of the successive expansion segments (3, 5) are rotatable relative to one another, in particular in order to rotate these expansion segments (3, 5) by 90 degrees relative to one another.

9. Robot according to claim 1, **characterised in that** its rearmost part is a plug segment (7) to which a main connecting plug of a supply cable, which is preferably configured in the form of a push/pull cable, can be plugged.

10. Robot according to any of claims 1 to 9, **characterised in that** it has an emergency power supply with electronics, which is preferably included in the plug segment (7) for temporarily supplying internal control components in the event of the supply breaking away, in order to move the double scissor lifts (18) of the self-locking expansion segments (3 and 5) and the self-locking feed mechanisms of the feed segments (6) together and, if necessary, to unlock the lifting device (2).

11. Robot according to claim 4, **characterised in that** the tools and/or measuring devices mounted on the head (1) contain at least one of the following: an ultrasonic measuring device for measuring the thickness of the pipe wall, a laser measuring device for 3D measurement of the pipe and deposits, a strong light source for selectively curing a resin hose, a laser for cutting away material or for engraving the pipe wall, a motor with brush or a milling head.

12. Robot according to claim 4 or 11, **characterised in that** an image sensor is mounted on the head (1) with a view to the tool(s) for transmitting a live image to a control unit and for positioning the robot at a specific location.

13. Robot according to any of claims 1 to 12, **characterised by** a programmed control for automatically approaching a defined point in the pipe or manhole system and/or for autonomously milling or grinding pipe or manhole walls in previously defined areas.

## Revendications

1. Robot pour la remise en état de pipeline et de trou d'homme sans tranchée avec
au moins deux segments d'expansion (3, 5),
chacun étant doté d'un mécanisme d'expansion autobloquant avec au moins un dispositif à double ciseaux (18) pour l'écartement et l'appui sur la paroi du pipeline ou du trou d'homme,
l'un des segments d'expansion (3) constituant le segment le plus en avant,
le mécanisme d'expansion, destiné à l'actionnement du dispositif à double ciseaux (18), présentant une broche (18d) qui est montée à rotation dans le segment d'expansion (3, 5) avec une orientation correspondant à la direction de déplacement (19g) du robot, et tous les segments (3, 5) étant couplés entre eux par des éléments de raccordement (4),
avec au moins un segment d'avance (6) entre deux segments d'expansion (3, 5),
**caractérisé en ce que**
chaque segment d'avance (6) comporte un mécanisme d'avance autobloquant pour augmenter ou réduire la distance entre les deux segments d'expansion (5) couplés audit segment d'avance (6), le mécanisme d'avance comportant un piston monté à une extrémité d'un élément de raccordement (4) et pouvant être déplacé vers l'avant et l'arrière par un entraînement à broche.

2. Robot selon la revendication 1, **caractérisé en ce que** les segments d'expansion (3, 5) présentent chacun deux dispositifs à double ciseaux (18) extensibles dans des directions opposées, qui peuvent être actionnés conjointement au moyen de la broche (18d).

3. Robot selon la revendication 1, **caractérisé en ce que** les éléments de raccordement
(4) sont des tronçons de tuyaux renforcés et rigides en torsion.

4. Robot selon la revendication 1, **caractérisé en ce que**, sur le segment d'expansion (3) constituant le segment le plus en avant, un dispositif de levage (2) avec une tête (1) montée sur celui-ci, pourvue d'au moins un outil et/ou d'un appareil de mesure est prévu, ledit dispositif de levage (2) étant conçu notamment pour la rotation et/ou pour le levage et l'abaissement de la tête (1).

5. Robot selon la revendication 4, **caractérisé en ce que** le dispositif de levage (2) comporte un élément d'entraînement (17) et un dispositif de verrouillage (9) qui sont reliés l'un à l'autre par un arbre de liaison (14).

6. Robot selon la revendication 4 ou 5, **caractérisé en ce que** deux segments d'expansion (3) couplés l'un à l'autre par un élément de raccordement (4) sont raccordés au dispositif de levage (2).

7. Robot selon l'une quelconque des revendications 1 à 6, **caractérisé en ce qu'**il présente au moins deux segments d'avance (6, 8) se trouvant chacun entre deux segments d'expansion (3, 5).

8. Robot selon l'une quelconque des revendications 1 à 7, **caractérisé en ce qu'**au moins deux des segments d'expansion (3, 5) successifs peuvent pivoter l'un par rapport à l'autre, en particulier pour que lesdits segments d'expansion (3, 5) puissent pivoter de 90 degrés l'un par rapport à l'autre.

9. Robot selon la revendication 1, **caractérisé en ce que** sa partie la plus arrière est un segment de connexion (7) sur lequel peut être raccordée une fiche de raccordement principale d'un câble d'alimentation, qui est de préférence réalisé sous la forme d'un câble poussé.

10. Robot selon l'une quelconque des revendications 1 à 9, **caractérisé en ce qu'**il présente une alimentation électrique de secours avec une électronique, qui est de préférence intégrée dans le segment de connexion (7) pour l'alimentation temporaire des composants de commande internes en cas de rupture de l'alimentation, afin de permettre le repli des dispositifs à double ciseaux (18) des segments d'expansion autobloquants (3 et 5) ainsi que des mécanismes d'avance autobloquants des segments d'avance (6) et, le cas échéant, le déverrouillage du dispositif de levage (2).

11. Robot selon la revendication 4, **caractérisé en ce que**, parmi les outils et/ou appareils de mesure montés sur la tête (1), figurent au moins l'un des éléments suivants : un appareil de mesure par ultrasons pour mesurer l'épaisseur de la paroi du pipeline, un appareil de mesure laser pour mesurer en 3D le pipeline et les dépôts, une source lumineuse puissante pour le durcissement ciblé d'un tuyau en résine, un laser pour couper le matériau ou pour graver la paroi du pipeline, un moteur avec une brosse ou une tête de fraisage.

12. Robot selon la revendication 4 ou 11, **caractérisé en ce qu'**un capteur d'image est monté sur la tête (1) avec vue sur le(s) outil(s), pour la transmission d'une image en direct à une unité de commande et pour le positionnement du robot à un emplacement déterminé.

13. Robot selon l'une quelconque des revendications 1 à 12, **caractérisé par** une commande programmée pour l'approche automatique d'un emplacement défini dans le système de pipeline ou de trou d'homme et/ou pour le fraisage ou le meulage autonome de parois de pipeline ou de trou d'homme dans des zones préalablement définies.
